Europäisches Patentamt

European Patent Office

Office européen des brevets

(19)

(11) Publication number: **0 171 499**

**A1**

(12) **EUROPEAN PATENT APPLICATION**

(21) Application number: **85102966.0**

(22) Date of filing: **14.03.85**

(51) Int. Cl.⁴: **B 23 P 15/42**

(30) Priority: **17.08.84 US 641861**

(43) Date of publication of application:
**19.02.86 Bulletin 86/8**

(84) Designated Contracting States:
**DE FR GB IT**

(71) Applicant: Roseliep, Robert Edward
6 Elmsleigh Lane
Grosse Pointe Michigan 48230(US)

(72) Inventor: Roseliep, Robert Edward
6 Elmsleigh Lane
Grosse Pointe Michigan 48230(US)

(74) Representative: Dipl.-Ing. H. Hauck Dipl.-Phys. W.
Schmitz Dipl.-Ing. E. Graalfs Dipl.-Ing. W. Wehnert
Dr.-Ing. W. Döring
Mozartstrasse 23
D-8000 München 2(DE)

(54) Method of making a pot broach and the resulting article.

(57) A method of manufacturing a pot broach with internally extending teeth and the resulting article which include selection of an outer housing (20), preparing an arbor (40) form to be located within the housing (20), providing end caps on the assembly of the housing and the arbor and introducing a hardenable, non-shrink material between the housing (20) and the arbor (40) to form an interior form for receiving broaching teeth strips (30). The strips (30) are accurately located in recesses in the hardened material (60) and secured by mechanical means such as headed bolts (32) extending radially into the housing (20). The resulting pot broach is used by pulling or pushing an unformed part through the internal recess of the assembly.

FIG.2

FIG.6

Title                                    0171499

Method of Making a Pot Broach and the Resulting Article

## Field of Invention

The manufacture of pot broaches of the type having inwardly facing teeth disposed around a common axis, the broaching being accomplished by pushing or pulling a part past the teeth in an axial direction along the axis to form a part with a specified external shape.

## Background of the Invention

Pot broaches are usually made by grinding tooth forms in rings or half sections which are mounted in stacked layers. These forms are internally ground or made with traveling wire EDM sections which are limited in thickness. The location by mechanical means does not always lead to an accurate broach recess. The pot broaching method also includes use of cutting tools of the stick type (elongate bars) which are bolted into a hollow tool holder to form an external shape cutting assembly. Some machines are disposed vertically and some horizontally and the part to be formed externally is either pushed or pulled through the opening formed by the tooth array. In some instances, the work part is mounted on a post and the tool assembly is mounted on a powered slide which moved over and past the part. Accuracy of location of the teeth has always been a problem.

In the present invention, the utilization of a poured epoxy to mount the broaching tools provides an accurate and unshifting matrix for the tools.

The poured type pot is made by first manufacturing a precision type arbor. Since the machining is all external on the arbor, this can be done conveniently and accurately. This arbor is positioned inside of a hollow solid body fixture which is usually cast iron, steel or aluminum but not necessarily limited to those materials. A parting agent is applied to the arbor and fixture dams, i.e., the caps on the fixture but is not applied to hollow body.

A commercially available epoxy type material is poured around or injected in the arbor and this hardens to a machinable, no-shrink compound. When cured, the epoxy material adheres to the main body where no parting agent has been applied. The caps are removed and the arbor is pushed out. The internal shape is as accurate as the arbor used and can be further machined for screw holes and such clearances as are desired. The cast surfaces are then utilized to position the cutting tools for a hollow cutting assembly.

Thus, the object of the invention is an improved pot shell for an internal broach which provides extreme accuracy and avoids difficult internal machining or the need for a split housing.

Other objects and features of the invention will be apparent in the following description and claims in which the invention is described together with details to enable persons skilled in the art to practice the invention, all in connection with the best mode presently contemplated for the invention.

Brief Description of the Drawings

DRAWINGS accompany the disclosure and the various views thereof may be briefly described as:

FIG. 1, a view of a hollow broach body constructed in accordance with the present invention.

FIG. 2, an end view of a tooth forming arbor.

FIG. 3, an elevation of the forming arbor illustrated in FIG. 2.

FIG. 4, a view of an internal broach housing ready for a pouring operation.

FIG. 5, a view of an end plate utilized in pouring.

FIG. 6, an end view of a completed broach assembly with broach teeth installed.

FIG. 7, an end view of a 24 tooth broach manufactured in accordance with this invention.

Detailed Description of the Invention
and the Manner and Process of Using It

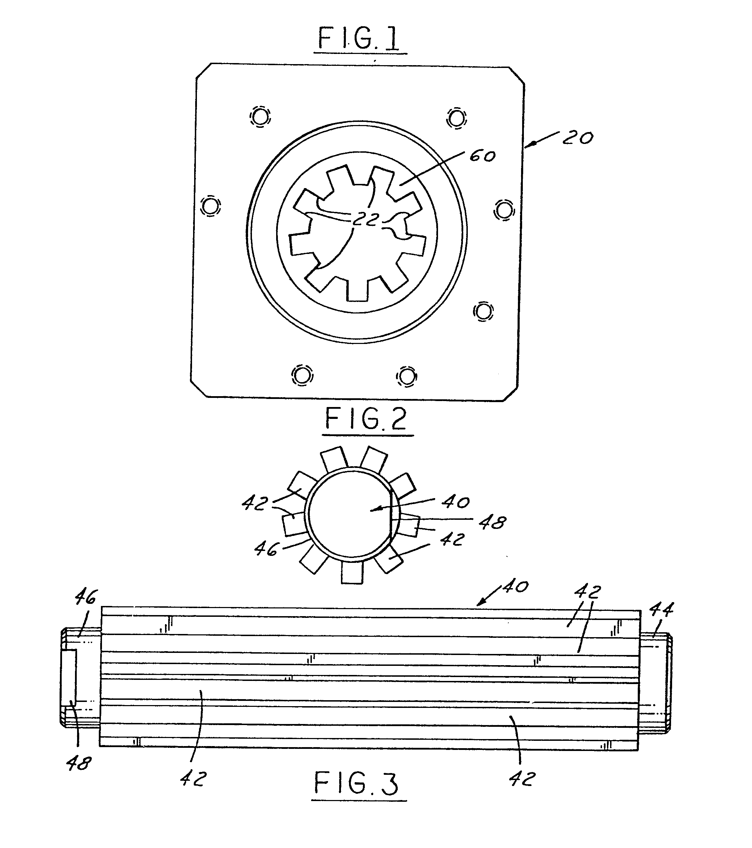

With reference to the drawings, in FIG. 1, a pot broach housing 20 is shown having a nine-recess shell for receiving broach teeth. The recesses are shown at 22. In FIG. 6, tooth strips 30 are shown seated in the recesses to provide a central cavity for a broach part. The tooth strips 30 are secured by headed bolts 32 located in holes drilled radially into the housing 20.

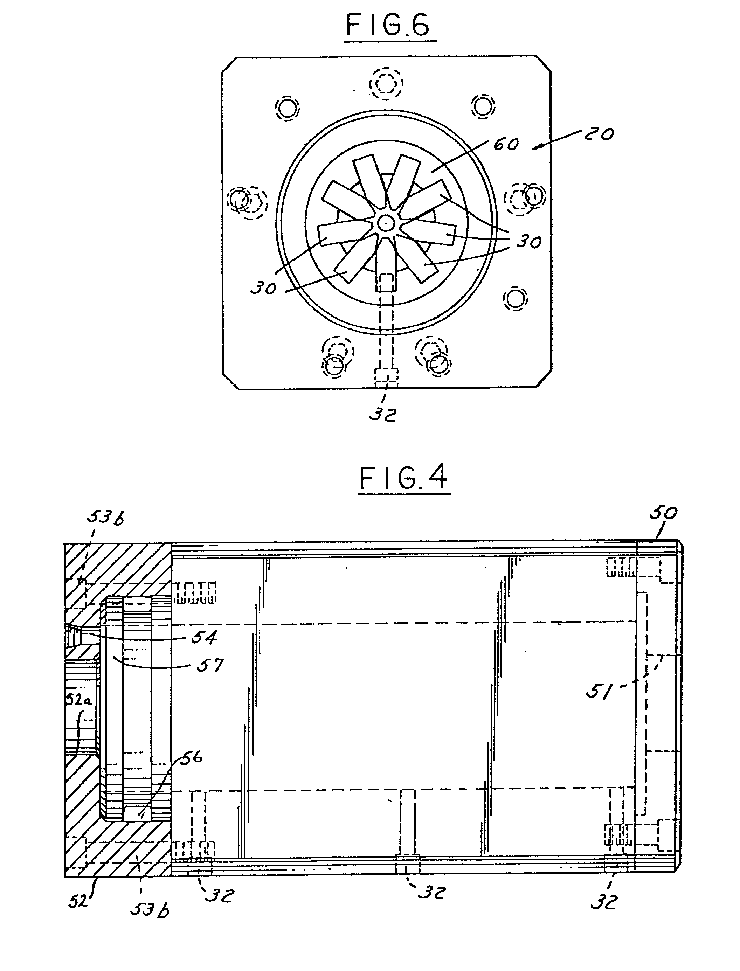

The broach housing shown in FIG. 1 is formed by providing, first, a basic hollow housing 20 with a large central recess. A forming arbor 40, shown in FIGS. 2 and 3, is shaped from a solid metal such as cast iron, steel, or aluminum which is accurately formed to provide the spaced ribs 42. Circular ends 44 and 46 are provided to position the arbor within the housing 20 utilizing end caps shown in FIG. 4. The end 46 has a flat 48 formed on one side to cooperate with a locating key to be described.

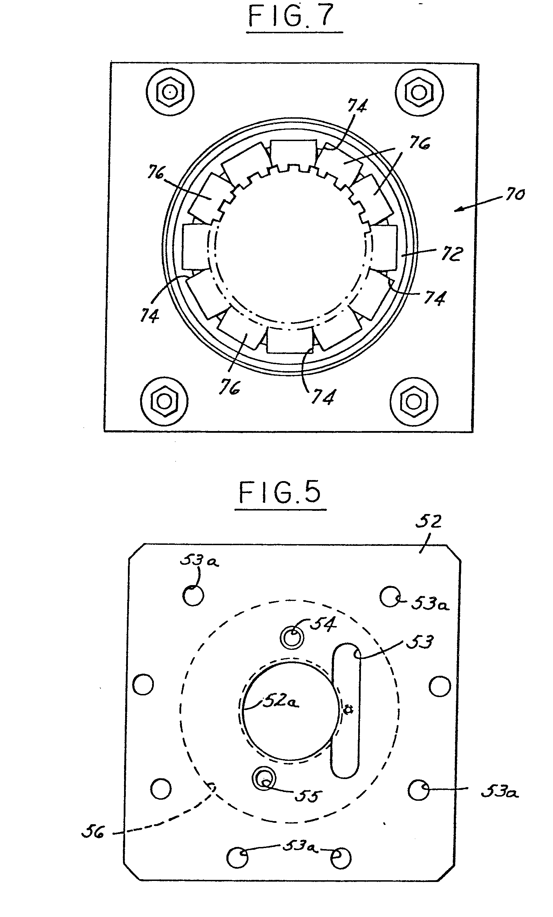

The arbor 40 is positioned in the housing 20 by a back-up ring 50 retained by suitable bolts at one end and a pouring ring 52 at the other end. The pouring ring 52 has a recess 52a to receive and locate end 46 of the arbor. In FIG. 4 these rings are shown without the arbor in place. The back-up ring has a central recess 51 to receive the end 44 of the arbor. The arbor has an external surface which is negative to that desired internally of the pot broach housing. The pouring end cap 52 is illustrated in FIG. 5. It has a key recess 53 to receive a key to locate the cap and bolt holes 53a to secure it to the assembly with bolts 53b for pouring. The key recess 53 will receive a locating key (not shown) which will cooperate with a flat 48 on end 46 of arbor 40 to orient the arbor circumferentially within the housing. Two holes 54 and 55 are utilized for the injection of an epoxy resin to be described. One hole may be utilized for the escape of air as the pot recess is filled. The pouring cap 52 has an internal recess 56 to receive an end ring 57 utilized to close the broach recess and retain the parts in assembly.

A parting agent is applied to the arbor 40 and the end caps 50, 52 and 57. The arbor 40 is then positioned in the housing 20 by the back-up ring 50 (end cap) and the pouring ring 52 (end cap). A commercially available epoxy type material is poured or injected into the end cap pouring ring 52 in a quantity which fills the space around the arbor. This material is a no-shrink compound, which, when cured to a hard state, is readily machinable. After curing, the end caps can be removed and the arbor stripped from the housing because of the parting compound. One commercially available material for the resin is sold under the trademark "Burchalloy".

Once the arbor 40 is pushed out of the cast material, the cross-section from the end of the housing 20 will appear as at 60 in FIG. 1. The interior of the cast material will be as accurate as the arbor form itself. As indicated, this arbor can be very accurately formed because the machining is all on the exterior surface.

The next step in the forming of the pot broach is the insertion of the broaching strips into the respective slots 22 in the cast element 60.

The housing 20 and the cast material 60 can be drilled radially to receive bolts 32 which engage broaching strips 30 at each end and along the lineal extent of the strips as desired. Once the toothed strips are assembled. The pot broach is ready to have parts pushed or pulled through the interior recess to obtain the desired form. Each broach strip 30 has, of course, the graduated teeth which start with light cuts (metal removal) and gradually remove metal to the final desired form. Here again, the machining and forming the toothed strips is done externally and consequently can be very accurate.

In FIG. 7, a larger housing 70 is shown with an internal cast body 72 which has radially disposed, inwardly-facing recesses 74 to receive toothed broach blocks 76, each of which has a double row of teeth suitably graduated longitudinally in a broaching sequence. Thus, a broach with twelve broach strips 76 provides a 24 tooth broaching pot. The blocks 76 will again be held in the cast, circumferentially spaced, radially recesses 74 by bolts extending through the wall of the housing 20 and the cast material 72.

Once the broach strips are installed in the cast liner of the housing, the broaching process proceeds in the manner presently known to the art.

0171499

**1.**

A method of forming an internal pot broach housing for use with toothed broaching strips which comprises:

(a)   providing a housing with an internal elongate recess,

(b) forming an arbor with an external surface negative to that desired in the broach for receiving broaching strips,

(c)   positioning the arbor within the recess of the housing spaced radially from the walls of said recess,

(d) introducing a flowable material into said housing around said arbor which will cure into a hard non-shrinkable lining within said housing having internally facing radial elongate recesses to receive broaching tooth strips, and

(e) removing said arbor from said housing to provide a pot-broach housing for the installation of toothed broaching strips.

**2.**

A method as defined in claim 1 in which said housing is open ended, and the additional steps of:

(f)   providing a closure end cap at one end of the housing,

(g) providing a pouring closure end cap at the other end of the housing, and

(h)   utilizing said end caps to locate the arbor within said housing prior to introducing the flowable material into said housing.

### 3.

A method as defined in claim 1 which includes:

(a) drilling said housing and lining radially into said recesses,

(b) installing toothed broaching strips in said recesses, and

(c) retaining said strips with headed bolts inserted into said radially drilled housing.

### 4.

A pot broach for the utilization of axially aligned toothed broaching strips which comprises:

(a) an elongate housing having an open-ended internal recess,

(b) a liner within said housing formed of a molded material bonded to the walls of said recess having elongate internally facing slots spaced circumferentially to receive toothed broaching strips, and

(c) means for retaining said strips in said slots around an internal broaching recess.

### 5.

A pot broach as defined in claim 4 in which said molded material is an epoxy resin.

FIG.1

20

60

22

FIG.2

42
40
48
42
46
42

46
40
42
44

48
42
42

FIG.3

## FIG.6

## FIG.4

0171499

## FIG.7

## FIG.5

European Patent
Office

**EUROPEAN SEARCH REPORT**

0171499
Application number

| DOCUMENTS CONSIDERED TO BE RELEVANT | | | EP 85102966.0 |

| Category | Citation of document with indication, where appropriate, of relevant passages | Relevant to claim | CLASSIFICATION OF THE APPLICATION (Int Cl 4) |
|---|---|---|---|
| X | DE - B2 -2 620 717 (KARL KLINK WERKZEUG- UND MASCHINENFABRIK)  * Column 3, lines 27-41, 52-67; claims 1,2,6; fig. 1-5 * | 1-5 | B 23 P 15/42 |
| A | AT - B - 195 732 (SOCIETE FINANCIERE D'EXPANSION COMMERCIALE ET INDUSTRIELLE S.A. "SFINDEX")  * Totality * | | |

|  | | | TECHNICAL FIELDS SEARCHED (Int Cl 4) |
|---|---|---|---|
| | | | B 21 D 37/00 |
| | | | B 21 K 5/00 |
| | | | B 23 D 43/00 |
| | | | B 23 F 21/00 |
| | | | B 23 P 11/00 |
| | | | B 23 P 15/00 |

The present search report has been drawn up for all claims

| Place of search | Date of completion of the search | Examiner |
|---|---|---|
| VIENNA | 20-11-1985 | TROJAN |

CATEGORY OF CITED DOCUMENTS

X particularly relevant if taken alone
Y particularly relevant if combined with another document of the same category
A technological background
O non-written disclosure
P intermediate document

T theory or principle underlying the invention
E earlier patent document, but published on. or after the filing date
D document cited in the application
L document cited for other reasons

& member of the same patent family, corresponding document

EPO Form 1503 03 82